# EUROPEAN PATENT APPLICATION

(11) **EP 0 895 171 A2**
(43) Date of publication of application: **03.02.1999**
(21) Application number: 98114099.9
(22) Date of filing: 28.07.1998
(51) Int. Cl.: G06F 17/60

(54) **System for planning projects**

(30) Priority: 28.07.1997 US 901573
(71) Applicant: Neoforma, Inc., Mountain View, CA 94040 (US)
(72) Inventor: Mcvicker, Wayne D., Mountain View, CA 94941 (US)
(74) Representative: Schoppe, Fritz, Dipl.-Ing.

(57) **Abstract**

A computer aided planning tool provides a platform having a process-based structure including various planning templates for a project linked to information stored in a relational database related to the task performed utilizing that particular template. The planning tool enables users to navigate from information available in various information galleries to process tools utilized to design the components of the project. The database comprises product catalog information and a library of additional information for targeted access. The information stored in the database is unmodifiable or customizable by designation of the entity which submits that information by including the log-in name and unique password of that entity when the information is submitted. A particular page at a web site may be accessed based on information selected during utilization of a particular planning template to supplement database information, rather than requiring users to browse the web site for the relevant page. Additionally, automated two-way e-mail over the Internet is provided to facilitate the acquisition of additional information which is then accessible by users and can be automatically imported for use in the planning templates, including use in applications programs, such a spreadsheet for calculating costs for the project.

## Description

### Field of the Invention

The present invention relates to productivity tools and, more particularly, to computer aided design (CAD) productivity tools. Specifically, one embodiment of the invention provides a computer aided design tool for persons who plan and implement projects.

### Background of the Invention

Persons who design projects are required to know or learn a great deal of information about a project for which they are assigned the responsibility to design. After that information is possessed, various productivity tools are known for designing projects. These productivity tools include various CAD tools which are commercially available for increasing design productivity. These productivity tools are generally provided for professional designers, such as architects and engineers.

For example, some projects require an in-depth current knowledge and expertise about the project, such as the design of a radiotherapy department for a healthcare facility, which necessitates knowledge of applicable regulations regarding acceptable dosage levels to radiotherapy technicians, materials and equipment utilized in the construction of a radiotherapy department, available commercial products, costs, etc. The design can require a number of complicated calculations, such as the thickness of the shielding that is needed to meet the regulations for radiation dosage levels received by technicians, and the thickness of the shielding depends upon the shielding material which in turn can depend upon the commercial availability of the material and trade-offs between the effectiveness of the material and the cost. This complicates the design process. Therefore, a need has existed for productivity tools for facilitating the design process and reducing the time to design a project, such as the radiotherapy department at a healthcare facility, as well as to enable a person to implement a project design through the purchase of products.

A useful productivity tool for designing a radiotherapy department is known. This productivity tool is commercially available as the Radiotherapy Department Toolkit from Neoforma, Inc. located in Mountain View, California. This toolkit includes a software-based planning tool and product catalog for radiotherapy departments resident on a database to enable facility planning to be efficient and fast by streamlining the complicated tasks of designing a radiotherapy department and purchasing needed equipment. Advantageously, in addition to providing a tool for configuring a radiotherapy department, the Radiotherapy Department Toolkit enables persons designing a radiotherapy department to access product information for selecting equipment for the department from the product catalog database. Additionally, this toolkit incorporates a web browser to enable persons to visit the web sites of various manufacturers whose equipment is included in the product catalog database. The Radiotherapy Department Toolkit enables persons to select shielding material manufacturers, to review current regulations, to generate standardized physics reports, and to simplify the design of complex shield barriers by automating tedious calculations. Therefore, this toolkit has proved to be a beneficial productivity tool for equipment planners, architects, physicists, physicians, administrators, and regulators.

Although the Radiotherapy Department Toolkit has various advantages, there are various limitations. Like CAD tools in the architectural and engineering fields that are limited to one aspect of a multi-faceted project, the Radiotherapy Department Toolkit is a specialized tool for the design of a single department. For example, a radiotherapy department may be only one of various departments at a healthcare facility, such as a hospital that additionally has emergency and operating rooms, a maternity ward, an intensive care unit, patient care and physical therapy departments, etc. Furthermore, the product catalog stored in the database of the Radiotherapy Department Toolkit is specialized, as are the other features, including calculation of shielding needs for radiotherapy equipment. Furthermore, the web browser of the Radiotherapy Department Toolkit simply enables persons to connect to the web sites of equipment manufacturers. Thereafter, persons must browse until the product information being sought is located at the web site.

Therefore, a project planting tool platform is needed that provides an expandable infrastructure that can be adapted as needed to far-ranging project planning applications. Such an adaptable productivity tool for planning a project must be flexible enough to accommodate expansion, such as the addition of planning modules to design various needed aspects of an overall project, and yet be efficiently configured to enhance productivity. Known productivity tools for planning the design of a project do not provide the infrastructure for substantially open-ended expansion and yet possess a level of integration and associational linkages, such as linkages and cross-linkages to and within a database and/or applications programs, such as spreadsheets, to serve as a platform for an efficient planning tool. Therefore, known productivity tools are inherently limited and constitute no more than special-purpose application programs that are not structured to be configured for other applications. At the same time, however, the project planning tool must also enable a person to implement the design for a project at the equipment level.

### Summary of the Invention

One embodiment of the present invention provides an infrastructure for an efficient project planning tool as a platform for a planning tool for planning and implementing a project. The platform provided by the project planning tool can be tailored to any project planning application, from designing, outfitting, and determining the cost of a building project to planning an entire healthcare facility instead of a single department.

The computer aided planning tool in accordance with the invention provides a platform having a process-based structure. The process-based structure comprises various planning templates linked to information stored in a relational database related to the task performed utilizing that particular template in connection with the project being planned. The computer aided planning tool enables users to navigate from information available in various information galleries to process tools utilized to design the components of the project. The database comprises product catalog information and a library of additional information for targeted access. The information stored in the database is unmodifiable or customizable by designation of the entity which submits that information by including the log-in name and unique password of that entity when the information is submitted. For example, product vendors can designate their information unmodifiable and distribute their own files of information to users directly. Database information can be supplemented by enabling users to connect to web sites over the Internet, and in accordance with the invention a particular page at a web site may be accessed based on information selected during utilization of a particular planning template, rather than requiring users to browse the web site for the relevant page. Additionally, automated two-way e-mail over the Internet is provided to facilitate the acquisition of supplemental information which is then accessible by users and can be automatically imported for use in the planning templates, including use in applications programs, such as spreadsheets for calculating costs for the project.

As a result, the computer aided planning tool in accordance with the invention enables users to readily select processes applicable to planning projects for which they have been assigned responsibility and to efficiently navigate within planning templates and access product and library information that enables projects to be implemented. This significantly enhances user productivity.

### Brief Description of the Drawings

The above and other objectives and features and the concomitant advantages of the present invention will be better understood and appreciated by those skilled in the art in view of the description of the preferred embodiments given below in conjunction with the accompanying drawings. In the drawings:
Fig. 1 illustrates one embodiment of the computer aided planning tool in accordance with the invention; and
Figs. 2-21 illustrate various screens that are displayed by the computer aided planning tool shown in Fig. 1 as a project is being planned.

### Detailed Description of the Preferred Embodiments

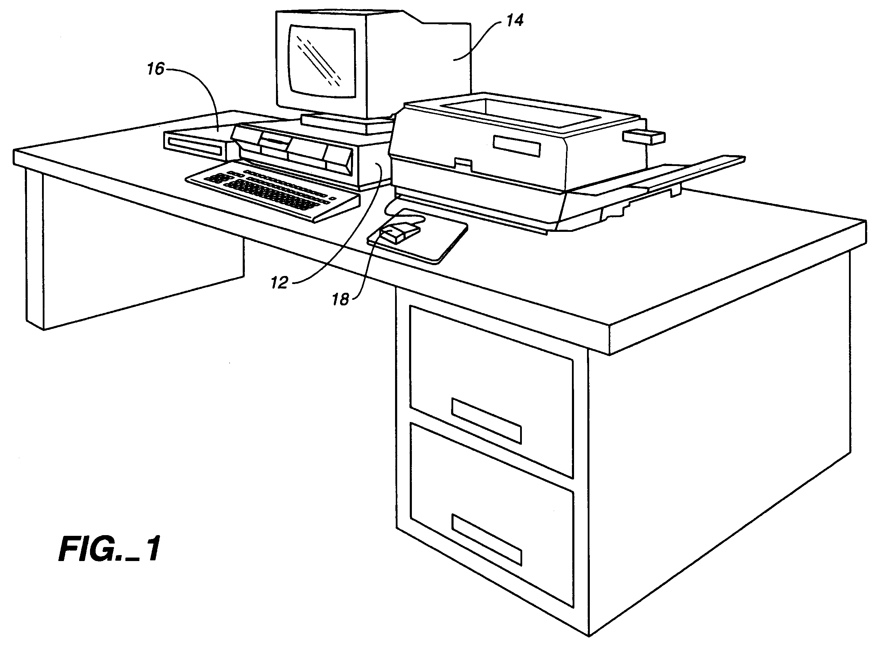

The computer aided planning tool in accordance with the various embodiments of the invention is executed on a computer 12, as shown in Fig. 1. The computer aided planning tool in accordance with one embodiment of the invention is preferably a 32-bit CAD application compatible with a Microsoft Windows 95 or Microsoft NT 3.51 or later operating system available from Microsoft, Inc. located in Redmond, Washington. The computer 12 comprises a minimum of 16 MB of random access memory (RAM) and preferably includes 24 MB of RAM. The computer 12 also comprises a hard disk drive having 40 MB of free storage space available. The computer is also provided with an Internet connection, such as a modern, for connection to web sites of other entities and exchange of e-mail.

In an alternative embodiment, the computer aided planning tool can be available by connecting to the web site of the supplier of the computer aided planning tool. The computer aided planning tool can be ported to the web and executed on a web server. Therefore, the requirements for the computer 12 would be reduced.

Means for displaying information preferably in the form of a monitor 14 connected to computer 12 is also provided. The monitor 14 can be a 640 x 480, 8-bit (256 colors) VGA monitor and is preferably an 800 x 600, 24-bit (16 million colors) SVGA monitor. The computer 12 is also preferably connected to a CD-ROM drive 16. As shown in Fig. 1, a mouse 18 is provided for mouse-driven navigation between design processes comprising the computer aided planning tool, such as navigation from room to room within one of a plurality of department planning templates, for example, a radiotherapy department for a healthcare facility. The mouse 18 also enables persons utilizing the computer aided planning tool (referred to hereafter as "users") to review and select products and services (collectively referred to hereafter as "products") available from various vendors from a plurality of different categories of products for implementing a project, such as radiotherapy equipment for the radiotherapy department of a healthcare facility that is being planned.

The computer aided planning tool preferably provides three-dimensional visualization of images on monitor 14, such as an entire radiotherapy department for a healthcare facility and the individual rooms in the radiotherapy department being planned. The computer aided planning tool also comprises a relational database having an easy-to-use graphical interface, so that stored product information can be accessed. Three-dimensional visualizations are also preferably provided for specific implementing products. The three-dimensional visualizations of implementing products are linked to screens displayed by the computer aided planning tool on monitor 14 featuring product specifications, drawings, and manufacturer details. All product screens are interrelated for easy navigation between views so users can learn more about the product, vendor, and how to contact the vendor, which are available to users at the click of mouse 18.

The computer aided planning tool also comprises functional modules linked to the information displayable in a planning template and other screens. For example, a spreadsheet application executed in the background can process information related to the project design and use product information accessed from the product catalog stored in the relational database to generate items in a table for determining the cost of various implementing components of a design, as well as the overall cost of the project design. For example, a shielding functional feature for planning a healthcare facility can automate the complicated calculation of shielding barriers for a radiotherapy department to facilitate the design process for the radiotherapy department for a healthcare facility.

The computer aided planning tool in accordance with the various embodiments of the invention comprises a blend of software tools consisting of code executed by a computer, such as computer 12 or a web server connected with computer 12, and a relational database accessible by the computer. The software tools can be encoded on a CD-ROM and downloaded into the computer to execute the computer aided planning routine in accordance with the invention. Data can also be initially provided on a CD-ROM and updated by providing revised data on another CD-ROM or by allowing data to be downloaded over the Internet as the need for updating the data arises. In one exemplary implementation to be described in more detail below, the data stored on the CD-ROM can provide a library or catalog of information related to healthcare for use in planning a healthcare facility, such as products available from various vendors of products to the healthcare industry. Additionally, the computer aided planning tool in accordance with the invention provides access to the Internet so that a web site can be browsed for information related to the project that the computer aided planning tool in accordance with the invention is being utilized to plan. The browser software is integrated into the software planning tool in accordance with the invention in a seamless fashion so that access to web sites of interest can be effected at various times while a project is being planned. In one exemplary implementation to be described in more detail below, web sites of various vendors of products to the healthcare industry are accessible by the computer aided planning tool in accordance with the invention by clicking mouse 18 on an entity name or logo for obtaining additional information relating to planning a healthcare facility, such as supplemental information about products available from various vendors of products to the healthcare industry. The integration of various sources of data for access is a salient feature of the computer aided planning tool in accordance with the invention.

Furthermore, the integration of a local database of product information with Internet access to the web sites of product vendors provided by the computer aided planning tool in accordance with the invention affords a targeted, reliable, easy, and timesaving approach to selection of products needed for the project being planned. This is based on a two-tiered approach. The first tier is that the database provided by the computer aided planning tool provides a general product catalog, but access to that general product catalog is based on the particular selection from among the set of targeted processes that has been selected and using one of various planning templates comprising the computer aided planning tool. Based on the particular planning template that is selected, knowledge-based access is provided to limit the portions of the database, that is, to limit the portions of the general product catalog, that are accessible for product information. The particular portions of the database that are accessible are limited to the particular targeted planning process that has been selected, which means that unlike the prior art, the entire general product catalog in the local database does not have to be browsed for applicable product information. Moreover, the information stored in the particular portions of the relational database becomes immediately accessible in the context of the process within the planning template, which obviates the need for users to browse for the information.

The general product catalog can be updated by providing revised data on another CD-ROM or preferably by allowing data to be downloaded over the Internet as the need for updating the data arises. For example, an updated CD-ROM can be created by downloading general product information from product vendors and providing the updated product information to users of the computer aided planning tool in accordance with the invention. Preferably, however, the general product catalog is updated by users directly downloading general product catalog information over the Internet. In any event, the general product catalog stored in the database accessible by the computer aided planning tool in accordance with the invention is preferably maintained by the product vendors. Therefore, the responsibility for providing the data to update the general product catalog resides with the vendors whose products appear in the database.

In this regard, each vendor is assigned a log-in name and a unique password by the supplier of the computer aided planning tool in accordance with the invention. The unique password enables the product vendor to access the portion of the archival database maintained by the supplier of the computer aided planning tool in accordance with the invention dedicated to the particular products of that product vendor included in the general product catalog. Access is preferably provided over the Internet. This enables product vendors to update information regarding their products that appear in the general product catalog as the need arises for updating that information, such as discontinuing a product, adding a new product to a product line, etc. One advantage of the computer aided planning tool in accordance with the invention is that the responsibility for updating general product information preferably resides with the set of product vendors, so that the best interests of the product vendors are served by their diligently updating their general product information as business circumstances dictate. This can be easily and quickly accomplished by downloading data over the Internet with the assurance that the integrity of the general product catalog can be maintained by the assignment of unique passwords. This also reduces the burden of database maintenance on the supplier of the computer aided planning tool in accordance with the invention.

One embodiment of the computer aided planning tool in accordance with the invention provides a set of targeted processes. In one exemplary implementation to be described in more detail below, the target processes relate to planning a healthcare facility, such as selecting the departments that will comprise the healthcare facility, architecting the physical layout of the facility including the various rooms from operating rooms to patient rooms to waiting rooms, selecting actual equipment to deploy in the architected rooms, such as medical equipment, furniture, and even decorations, and other products available from various vendors of products to the healthcare industry. The targeted processes are frilly enabled by the computer aided planning tool in accordance with the invention. A relational database is provided for providing information needed in the planning process. Access to applicable information stored in the database is determined by the particular targeted process that is selected. A spreadsheet is executed in the background for performing calculations needed in the planning process. In one exemplary implementation to be described in more detail below, the spreadsheet application software can compute costs for the healthcare facility being planned, such as cost information depending upon the materials, equipment, accessories, and other costs involved in constructing and furnishing a healthcare facility. A suite of conventional software application tools can be provided to enable planning, such as architectural application software.

In order to implement the targeted processes provided by the computer aided planning tool in accordance with the invention, a process-based graphic user interface (GUI) is provided. The process-based interface comprises a menu of available selections corresponding to the targeted processes that are provided by the computer aided planning tool in accordance with the invention. Additionally, the GUI of the computer aided planning tool in accordance with the invention is intuitive, and a sufficient number of help screens are provided that the need for hardcopy documentation in the form of a user manual is obviated.

Preferably, each of the targeted planning processes is connected to a portion of the general product catalog stored in the database related to that planning process, so that the general product catalog provides the backbone of the computer aided planning tool in accordance with the invention. This enables users of the computer aided planning tool in accordance with the invention to migrate easily from a targeted planning process directly to specific product information, which substantially reduces the time needed to fully plan a project and obtain concrete information, such as cost information, for project implementation. Tables generated by users including the results of any calculations performed by the spreadsheet can be utilized to generate an order report utilizing the reporting features of the computer aided planning tool.

The computer aided planning tool in accordance with the invention provides a specialized design tool integrated with the product database backbone. The computer aided planning tool is also integrated with community provided information in a library database for enabling entities provided with the computer aided planning tool to design and implement a project including complicated technical aspects of the project. In one embodiment of the invention, the library information stored in the database comprises information which can only be modified by the entity which has submitted the information and, alternatively, the information can be customizable. Typically, product information submitted by vendors is submitted with the log-in name and unique password of the vendor so that users cannot modify the information. An entity which submits library information can also include its log-in name and unique password with library information to render that information unmodifiable. Otherwise, information in the database can be imported by users and modified. Enabling product and library information to be designated as unmodifiable can better assure the integrity of the database.

The computer aided planning tool preferably includes integrated spreadsheet applications software integrated with the computer aided planning tool, which is linked to predetermined selections from the planning templates and executes in the background for calculating the quantity and cost of components needed to implement a project For example, the spreadsheet applications software can be configured to calculate the amount of shielding material based on a selected type of material using conventional equations for determining the amount of a material based on the shielding properties of the particular material and then calculates the associated cost of utilizing that material in a radiology department of a healthcare facility. The spreadsheet is integrated with the database and linked by selection of the planning template to product information and library information to import the information needed to perform the needed calculations to determine quantity and cost which are then displayed. Preferably, the computer aided planning tool displays the particular product, together with the quantity and cost, in tabular form. Therefore, complicated aspects of planning a project are processed in the background by the computer aided planning tool, so that complicated procedures connected with a selected planning template and various procedures that require expert knowledge are performed in the background simply through the selection of a template and straightforward selection of available components, such as products available to implement those components. This facilitates planning a project, particularly a complicated project that may require expert knowledge in a particular field. Advantageously, even an expert in the particular field is able to save a great deal of time, since tedious calculations are performed automatically by the computer aided planning tool.

The library of information stored in the database is also preferably updatable through connection over the Internet to the web site of the entity which published the information. The library of information comprises submittals of information by the universe, or community, of entities which are provided with the computer aided planning tool. Any person who has authorized access to the computer aided planning tool at an entity provided with the computer aided planning tool can author and submit information for access by the entire community of entities which also are provided with the computer aided planning tool and users at those entities. Any such entity or person who desires to author information for inclusion in the library can add the information to the web site of the entity where the information is authored and/or can submit the information to the supplier of the computer aided planning tool. The submitted information is published through the library available to entities provided with the computer aided planning tool. The information published by the supplier of the computer aided planning tool and/or not submitted but simply accessible through browsing the web site of the entity at which the information was authored enables direct access by users of the computer aided planning tool. Preferably, the computer aided planning tool includes linkages to the addresses of the web sites of entities which publish in the subject areas related to the selected planning template as part of the relational database, so that users can easily determine the web site addresses which they can browse if they desire to seek additional information. The interests of all are served by the submission of information for publication in the library.

For example, one group of entities provided with the computer aided planning tool is, of course, persons who desire to plan a project, such as a healthcare facility. It is important that those persons are informed regarding any applicable regulatory requirements for the project, such as the maximum level of exposure to radiation that is permitted to technicians who work in a radiation therapy or radiology department at a healthcare facility. Moreover, these persons are also well-served to learn from the experience of other entities which have implemented a similar project and to also determine whether or not an industry or trade association or other professional group has published guidelines or standards that facilitate the implementation of a project, such as guidelines by the American Medical Association for equipping a hospital emergency room or intensive care unit. Moreover, some entities may voluntarily publish information about a project that may be invaluable to another entity planning a project at a later time and the prestige that can attach to the publishing entity when other entities re-use part or all of an implementation developed by the publishing entity, such as one healthcare planner implementing an intensive care unit based on the implementation of such a department submitted by Stanford University Hospital.

Another group of entities provided with the computer aided planning tool and well-served by submission and publication of information is any governmental agencies which oversee regulation of the implemented project, such as a healthcare facility. The fact that there are regulations regarding an implementation that incorporates regulated equipment, such as radiation equipment in a healthcare facility, has been mentioned earlier. Other regulations may also apply to a project being planned, such as building codes that apply to a healthcare facility. Government agencies and other regulatory or oversight agencies can easily and effectively disseminate needed information by submitting the information to the provider of the computer aided planning tool for publication or having that information available at their web site for access by users of the computer aided planning tool.

An additional group of entities provided with the computer aided planning tool and well-served by submission and publication of information is professional consultants who specialize in the planning and/or implementation of various aspects of the given type of project and who are available to be retained by the entity accessing the library for information, for example, a hospital architectural firm which could be retained to render actual plans for construction of a hospital. The library accessible by the computer aided planning tool provides a vehicle for a professional consultant to publicize expertise and prior experience by having that information available at the web site of the consultant for access by users of the computer aided planning tool.

As a further and quite obvious example, a group of entities provided with the computer aided planning tool and motivated to submit information for publication is vendors of products for actual implementation of the various components of the project that is the subject of the planning. The library accessible by the computer aided planning tool provides a mechanism for a product vendor to publicize important product development and product announcements, such as the development of new oncology equipment for the radiotherapy department at a healthcare facility, by having that information available at its web site for access by users of the computer aided planning tool.

The groups of entities that would publish in the library accessible through the computer aided planning tool in accordance with the invention vary from one type of project being planned to another. Therefore, there is no limit to the community of entities which are provided with the computer aided planning tool and persons at those entities who would author and submit information.

Considered in more detail, the product database stores product information. The product information comprises graphic and/or text information relating to products. The product graphics and/or text for the various product information stored in the database is preferably provided and updated as needed (i.e., maintained) by the respective vendors of those products. Similarly, the library information comprises graphics and/or text information relating to products or other aspects of a project. The graphics and/or text for the various library information stored in the database is also preferably provided and updated as needed (i.e., maintained) by the entities of the community which submit that information for publication. The computer aided planning tool displays this graphic and/or text when a planning template is active and the product is selected for implementing a component of the project being planned.

When a particular component is selected within a planning template, one embodiment of the computer aided planning tool in accordance with the invention enables additional information relating to that component, such as a product, to be obtained, that is, the computer aided planning tool provides a mechanism to obtain information to supplement product information stored in the database. The additional information is obtained by selecting a specific product, for example, by clicking mouse 18 on a product listed on a screen displaying one or more products of a vendor. In response to selection of the specific product, the computer aided planning tool connects over the Internet to the vendor and directly accesses the page at the web site of the vendor where the additional information about that particular product appears. This obviates the need for users of the computer aided planning tool to browse the web sites of vendors for additional product information when specific products have been selected.

In another embodiment, the additional information is obtained by a two-way e-mail exchange between the computer aided planning tool and the vendor of the selected implementing product or entity which authored the library information. To facilitate the exchange of e-mail, the computer aided planning tool preferably provides check boxes within the planning template, which can be selected to request a quote or supplemental information or references relating to a product. If a check box is not selected, the request is preferably defaulted to a request for supplemental information relating to the product. In response to selection of a check box, the computer aided planning tool preferably automatically assembles a pre-formatted e-mail message by the computer aided planning tool to the e-mail address of the vendor or publishing entity stored in the database together with the product or library information. The assembled request message contains: an identification of the product or publication about which supplemental information is requested, the e-mail address of the vendor or product entity to which the query is to be sent as well as the e-mail address of the computer aided planning tool which sends the request, and a pre-formatted text message dependent upon the selected check box, such as "Please reply with pricing information for the product identified in the subject of this message" or "Please reply with all available product information respecting the product identified in the subject of this message." Preferably, the computer aided planning tool enables customized notes to be appended to the pre-formatted text, for example "Please also specify earliest delivery date and method of shipment." If the vendor or publishing entity does not have a current e-mail address, the assembled e-mail request preferably additionally incorporates the facsimile transmission number of the requesting entity, and the e-mail address is preferably defaulted to the e-mail address of the supplier of the computer aided planning tool. Upon receipt of the e-mail message with the default e-mail address by the supplier of the computer aided planning tool, the supplier can convert the e-mail message to a facsimile transmission and send the facsimile transmission to the vendor or publishing entity with a request to reply by facsimile transmission to the telephone number of the computer aided planning tool which sent the request. For example, if additional information is desired about a large number of products needed for implementation of a project being planned, an e-mail message is assembled for each product as to which additional information is sought and sent to each of the product vendors, which may result in a substantial volume of e-mail messages being sent to product vendors by the computer aided planning tool.

If the vendor or publishing entity to which the request is addressed also possesses e-mail capability, a pre-formatted reply is assembled. The assembled reply message contains: an identification of the product or publication about which supplemental information was requested, the e-mail address of the computer aided planning tool which sent the request as well as the e-mail address of the vendor or publishing entity which sends the reply, and a pre-formatted text message dependent upon the selected check box, such as "The price of the product identified in the subject of this message is $...." or "Supplemental product information respecting the product identified in the subject of this message is...." Preferably, the reply can also include a separate section for reply to any customized note appended to the pre-formatted text, for example, "The earliest delivery date is ... and method of shipment is by overland freight."

Two-way e-mail over the Internet provides significant advantages. One advantage is that e-mail affords an effective mechanism for communicating product and published information. Another advantage is that e-mail obviates the need to interrupt the planning process to telephone or draft a letter request for supplemental information. E-mail is particularly convenient when the vendor or publishing entity is located In another time zone or another country. Consequently, international products and published library information from abroad can more logically be included in the database. Therefore, the computer aided planning tool has global geographical application.

Also, a preferred embodiment of the computer aided planning tool in accordance with the invention automatically processes replies by vendors and publishing entities to e-mail requests. Users route e-mail replies to an e-mail queue when the e-mail application of the computer on which the computer aided planning tool executes is active. When the computer aided planning tool is thereafter executed, the e-mail replies in the e-mail queue are automatically parsed, and the pre-formatted replies are disassembled and the supplemental information is de-embedded and entered in the tables of the planning templates that existed at the time when the check boxes of those templates were checked to generate the corresponding requests. The format of the de-embedded information is compatible with the other information contained in the tables that have been generated within the planning template. This provides a very powerful and automated mechanism for inclusion of supplemental information for planning a project and implementing components of that project. This supplemental information is also processed by any spreadsheet application program executing in the background to perform calculations, such as the total cost of implementing a project.

One implementation of the computer aided planning tool in accordance with the invention will now be described. It is to be understood that the implementation to be described is by way of example and not by way of limitation. The features of the computer aided planning tool in accordance with the invention apply generally to planning a project and are not restricted in any manner to the specific implementation to be described below. Other exemplary potential implementations will be mentioned following a detailed description of the one exemplary implementation.

One exemplary implementation provides a computer aided planning tool for healthcare. In one implementation, for example, the computer aided planning tool can be a healthcare facility planning tool.

The computer aided planning tool comprises a relational database comprising product information from vendors. The database also comprises a library comprising worldwide regulatory agency regulations and other information, such as files generated by record-and-verify systems like VARiS, which can be accessed from the library stored in the database. Also, the library can store information relating to architectural solutions that present a sampling of architectural drawings and graphics of architectural design implementations from around the world for evaluation by an architect involved in a planning project for a healthcare facility. The computer aided planning tool in accordance with one implementation of the invention can include a spreadsheet application, such as Lotus 1-2-3 available from Lotus Development Corporation, which is pre-configured to perform various calculations within a selected planning template such as the cost of a project being planned. A spreadsheet can be also be configured to calculate shielding in connection with a process which comprises designing a radiotherapy department. Automated shielding calculations are provided by the known Radiotherapy Toolkit and therefore do not in and of themselves constitute the present invention. Products available from vendors, such as commercially available doors ad wall assemblies, can be selected, and parameters included in the information relating to those implementing components stored in the product database are called by the spreadsheet and used in the calculations performed by the spreadsheet. Regulatory agency defaults can also be used in the spreadsheet calculations.

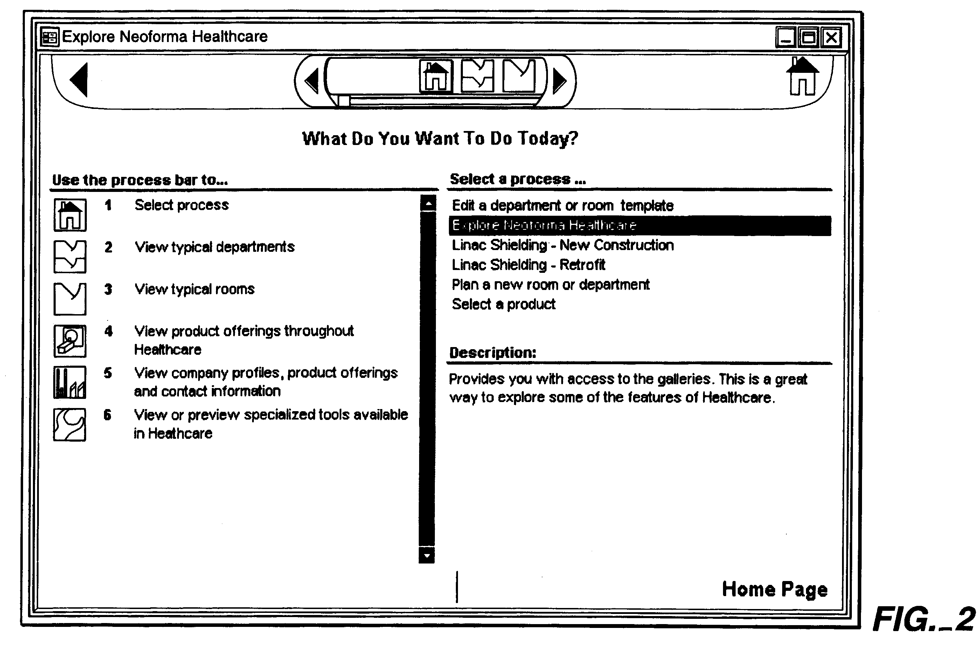

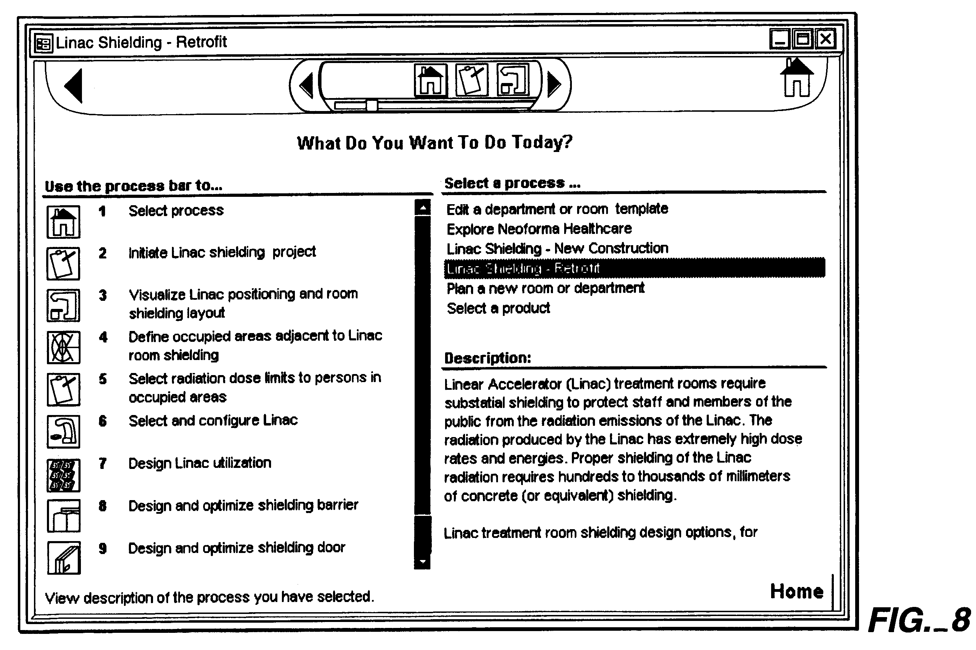

The computer aided planning tool, which comprises a program or set of coded instructions which is executed by computer 12 or a web server to which computer 12 is connected, will now be described in detail with reference to Figs. 2-21. Fig. 2 illustrates an opening screen, which can be referred to as the process screen, that is displayed by monitor 14 when the computer aided planning tool is opened or accessed. In the event that the computer aided planning tool is executed by a web server connected to computer 12, the process screen can be denoted as the "Home Page," as indicated at the lower right hand corner of Fig. 2.

The process screen shown in Fig. 2 is the screen in which the interface to the various processes throughout the computer aided planning tool is defined. Generally, the computer aided planning tool comprises many different screens associated, or linked, in many ways. Each screen is treated as a unique object, which enables screens to be bundled through linkages in different orders to create different modules. The process-based platform provided by the computer aided planning tool provides navigation through a variety of tools and a variety of screens of information accessed from the associated relational database, and the process-based interface facilitates navigation. The user can select next and previous buttons, move a slider to jump ahead and behind, and select specific icons. All icons are defined on the process screen, and the user can jump to the process screen multiple ways. The pointer can be positioned on an icon to cause the definition of that icon to appear. There are many ways for the user to jump around as well as to be guided through a process, unlike web interfaces which are random interfaces that are not for designed for a particular process, such as found in the known Radiotherapy Department Toolkit. A selected process of the computer aided planning tool guides the user through steps of that particular process as a part of process.

The process-based interface of the process screen shown in Fig. 2 enables the user to build a process based on a set of menu commands. The process-based interface of the computer aided planning tool enables the user to focus on a selected process to plan and implement a project. In contrast, the known Radiotherapy Department Toolkit lacks the guided, directed, and customizable tour of screens, for example, approximately 45 to 60 screens, of which only a portion, for example, 20 screens, are pertinent to any particular user, that is provided by the computer aided planning tool.

The processes which are listed on the process screen shown in Fig. 2 are user definable so that the processes can be configured on a profession-specific basis, such as processes for planning an entire healthcare facility. Furthermore, a hospital administrator is likely to utilize different processes that an architect or a physicist. Consequently, the process-based interface can be redesigned. The resulting process screen is also a file which can be rendered unmodifiable, display-only information. This provides a flexible process-based platform for the computer aided planning tool.

The process screen shown in Fig. 2 enables a user to position the mouse pointer to highlight one of the identified processes under "Select a process..." on the right hand side of the screen and view a description of that process below. Moreover, the features of the highlighted process appear on the left hand side of the screen. In the exemplary implementation of the computer aided planning tool for planning a healthcare facility, the process screen can include the processes "Edit a department or room template," Explore Neoforma Healthcare," "Linac Shielding - New Construction," "Linac Shielding - Retrofit," "Plan a new room or department," and "Select a product," for example. The user can define other processes or delete one or more of the process selections listed on the process screen shown in Fig. 2 to provide a process-based interface that can be customized at the home page level.

The processes can vary in complexity. In this regard, "Plan a new room or department" is a comprehensive process tool for planning and implementing departments and individual rooms of a healthcare facility and "Linac Shielding - New Construction" is a specialized process tool for designing and implementing shielding for a radiotherapy room at a healthcare facility. On the other hand, "Select a product" is a streamlined process for identifying products for implementation of a component of a project.

Clicking mouse 18 on the highlighted process on which the pointer is positioned selects the identified process. As shown in Fig. 2, the highlighted process is "Explore Neoforma Healthcare." This can be designated as the default process and provides access to various screen galleries for the user to browse. Clicking mouse 18 causes "Explore Neoforma Healthcare" to be selected. This process enables the user to simply access and view screens contained in various screen galleries associated with the features on the left hand side of the process screen shown in Fig. 2. This process allows the user to navigate through screen galleries, rather than the screen galleries being tied to one of the other processes listed in the process screen and thus browse the program in overview fashion. The screen galleries comprise the following galleries.

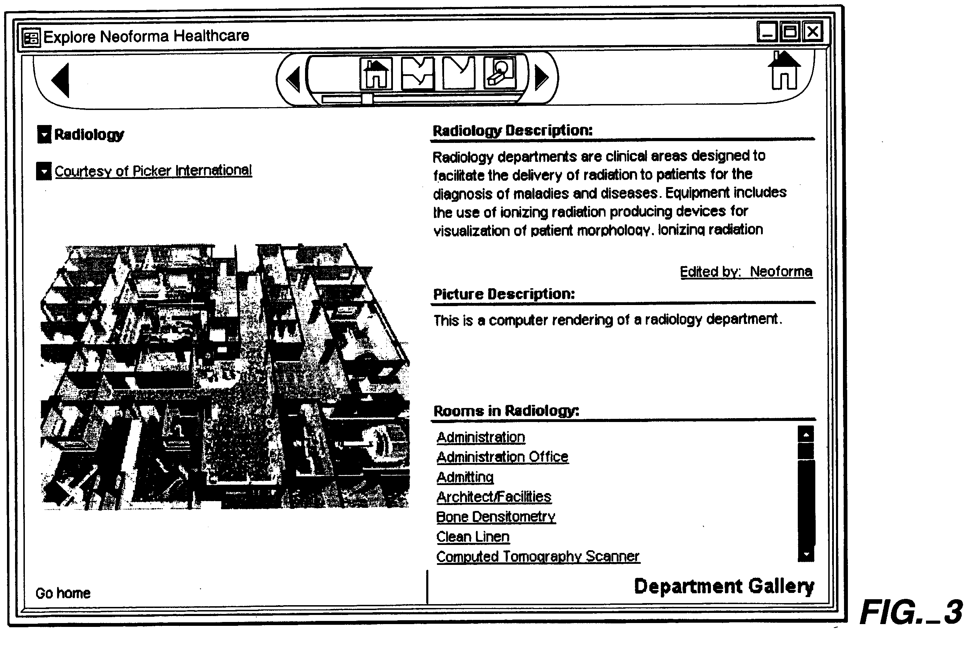

A department galley enables a user to view the overall scope of one component of a planning project. The screens contained in the department gallery provide the user a bird's-eye view of an entire department, such as a radiotherapy department. For example, Fig. 3 illustrates such a department gallery screen accessed through the "Explore Neoforma Healthcare" process and displayed on monitor 14. The department gallery screen shown in Fig. 3 lists available room choices in the lower right portion of the screen which are linked to detailed descriptions and requirements of each room. The process from which the screen is entered, that is, "Explore Neoforma Healthcare," appears at the upper left hand corner of the screen shown in Fig. 3, while the screen being viewed by the user is identified in the lower right hand corner ("Department Gallery"). The department gallery enables easy, mouse-driven navigation from room to room within the department. The department gallery provides three-dimensional department visualization as shown in Fig. 3, as well as specific information regarding the location and relationship of rooms for design optimization and implementation.

As shown in the upper left portion of Fig. 3, the screen was submitted by a product vendor. The information contained in the screen is therefore identifiable with a specific source and is unmodifiable, display-only information.

A rooms gallery is enabled by the user selecting any room from the department gallery. The rooms gallery enables the user to access information stored in the relational database that provides an in-depth description of the equipment recommended for that room. The screens contained in the rooms gallery displays only product information relevant to the selected room, so that the product selection and evaluation process is focused. The screens contained in the rooms gallery also present product categories sorted in logical, functional, and room-determined groupings.

A products gallery is enabled when the user selects any product category either by clicking the mouse on the three-dimensional representation of the category or by choosing from the categories listing. The screens contained in the products gallery display listings of vendors and their products. The products gallery provides detailed descriptive information submitted by the vendor of the product for each of the listed products. The screens contained in the products gallery also enable the user to review product highlights and choose vendors for further evaluation. The products gallery provides all of the relevant information needed for full evaluation of a product family or specific product for implementation of a component of the project being planned and potential purchase by the user. The screens contained in the products gallery provide detailed descriptions, features, benefits, and specifications relating to the products. The screens contained in the products gallery also preferably provide precise product drawings, photos, and/or graphics so that the user can gain an accurate understanding of the product. The products gallery also preferably directs the user to the product vendor and provides contact information for the vendor by the user clicking mouse 18 on the vendor logo or name.

A company information gallery enables the vendor to promote its products to the user. The company information gallery contains screens that include corporate profile or background information, awarded certifications, and listings of the international markets in which the vendor is active. The company information gallery links to the products gallery screens for all products that the vendor has listed in the product catalog stored in the database. The screens contained in the company information gallery provide information regarding how the user can directly contact the vendor.

Unlike other processes listed on the process screen, the process invoked by selection of "Explore Neoforma Healthcare" is a substantially unguided process. This process also enables the user to browse tools available in connection with other listed processes, as well.

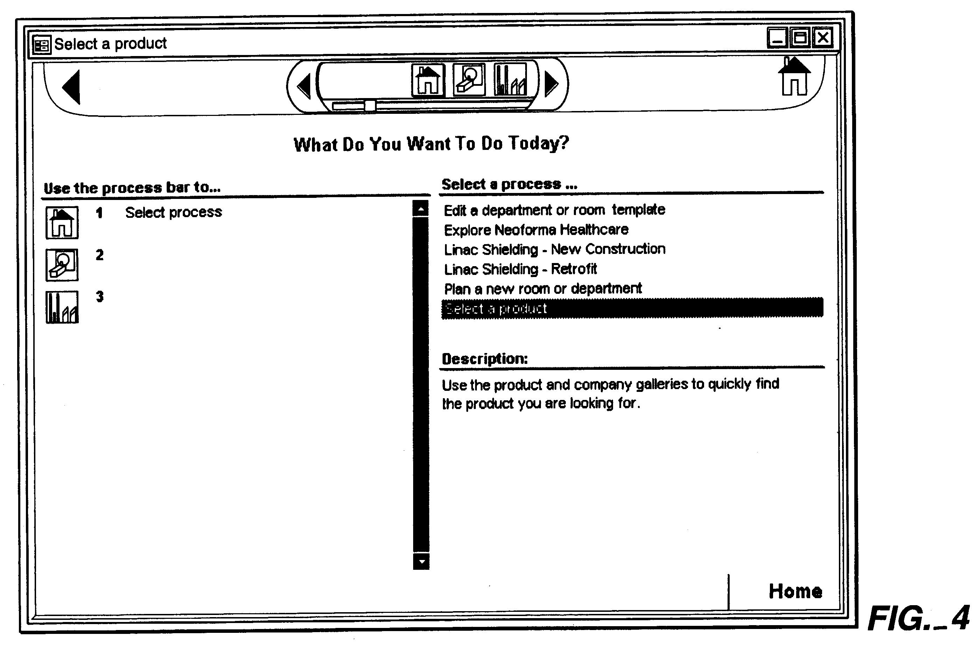

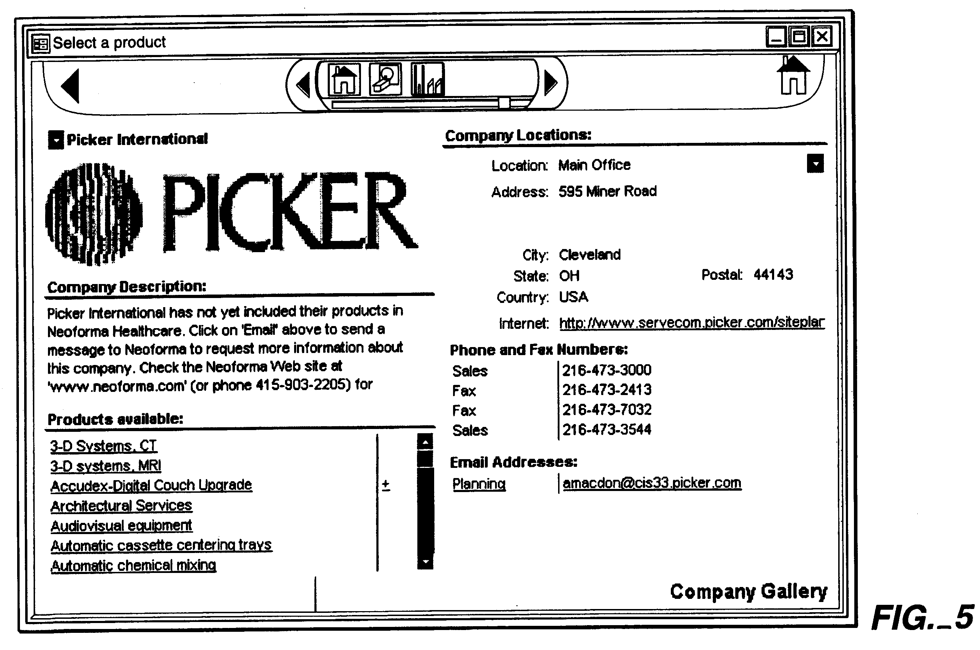

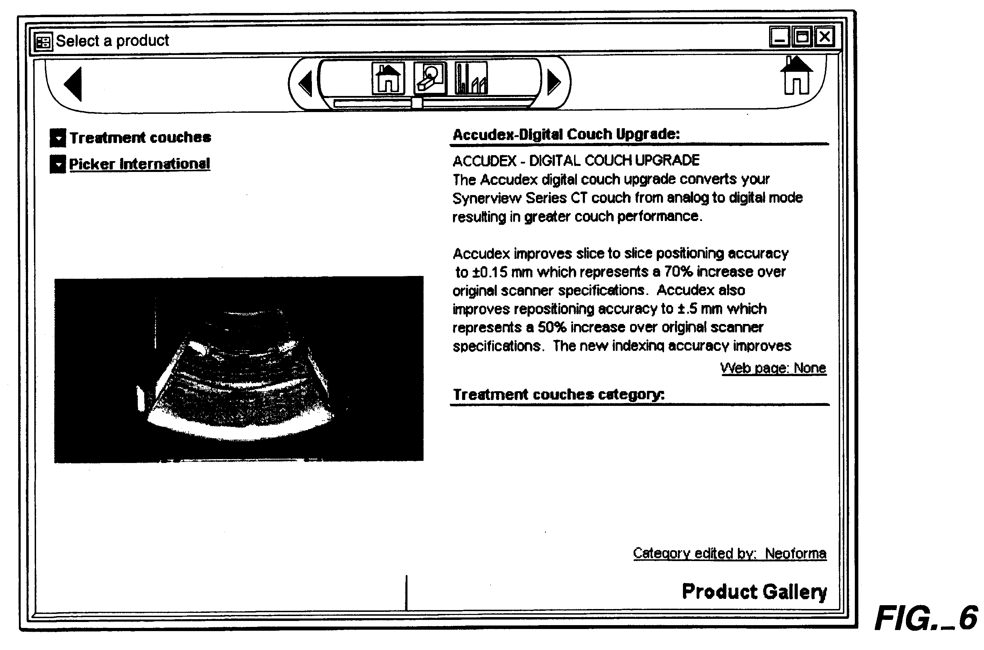

A streamlined process selectable from the process screen shown in Fig. 2 is "Select a product." The user first positions the pointer on "Select a product" to highlight that process, as shown in Fig. 4, and clicks mouse 18 to select that process. Selection of the product selection process causes the computer aided planning tool to access the company information gallery and display a screen, such as the product vendor screen shown in Fig. 5, which lists various products available from that vendor in the lower left portion of the screen. The user next performs the task of selecting a product by pointing to a desired product and clicking mouse 18. The computer aided planning tool user then accesses the product catalog in the database and accesses the product gallery linked to the screen in the company information gallery shown in Fig. 5. This causes a screen in the product gallery, such as the screen shown in Fig. 6, to be displayed from which the user can complete the task of implementing a component of the project, for example, designation of the treatment couch shown in Fig. 6 for a radiotherapy department of a healthcare facility.

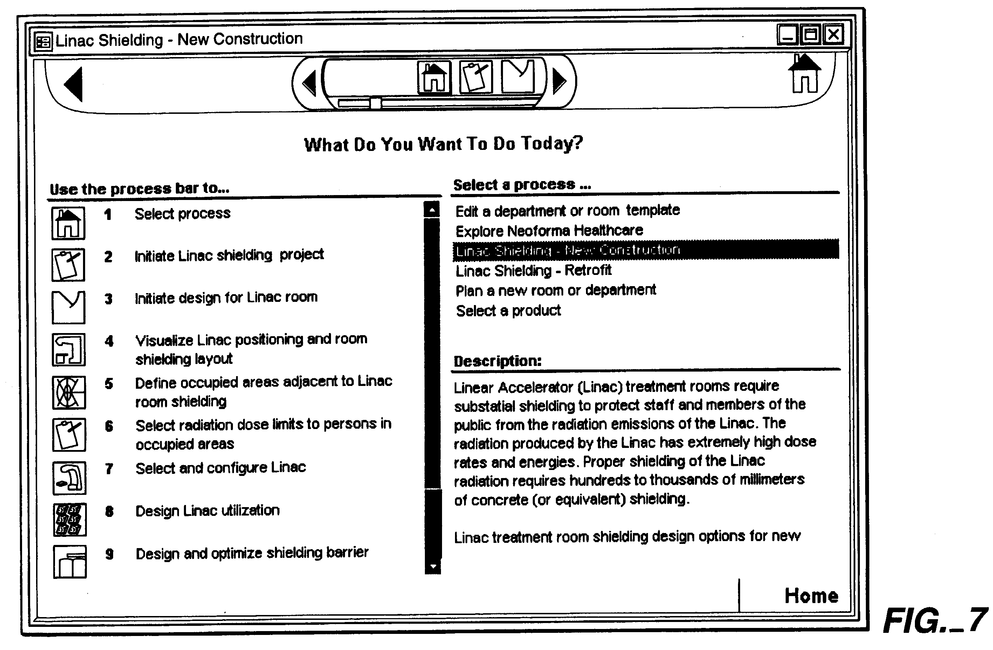

"Linac Shielding - Retrofit" and "Linac Shielding - New Construction" are examples of more complicated processes selectable from the process screen shown in Fig. 2. The user first positions the pointer on "Linac Shielding - New Construction" to highlight that process, as shown in Fig. 7, and clicks mouse 18 to select that process. Alternatively, the user can position the pointer on "Linac Shielding - Retrofit" to highlight that process, as shown in Fig. 7, and clicks mouse 18 to select that process. There are slight differences between these two processes, but a majority of the screens utilized by these two processes are substantially similar. That is, the processes are both linked to shielding screens.

For example, selection of the linac shielding process for new construction causes the computer aided planning tool to access product information stored in the database for all products in the healthcare industry related to a linear accelerator room, bound intricately into the process of designing a linear accelerator room, and to jump immediately into a specialized tool for designing shielding in part based on access to applicable regulatory information contained in the library information stored in the database. The user can set up project information for the shielding project.

Additionally, the tool for designing shielding is linked to library information useful in the context of a shielding project, for example, information contained in the library stored on the database relating to similar projects implemented by others. That is, the user can access the room gallery and browse linear accelerator room information to obtain information within the process of designing shielding for a new construction project. This enables the user to explore a community-based and edited library of information, while utilizing the specialized shielding tool.

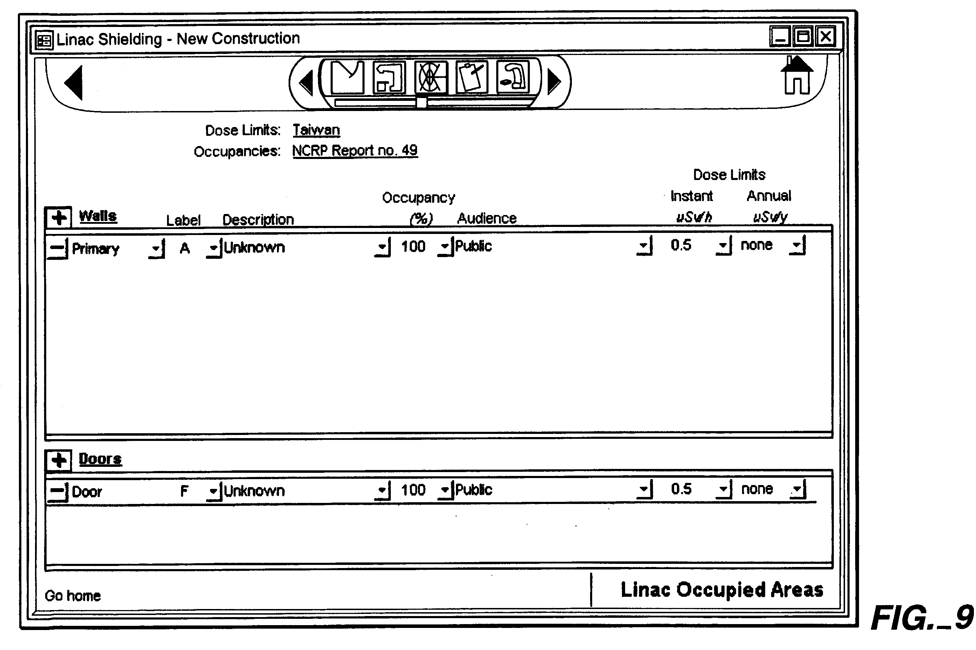

Library information stored in the database can also be accessed for used in calculations performed by the specialized shielding tool comprising the linac shielding process for new construction, such as regulations issued by governmental agencies or other organizations which have oversight responsibility for a project that involves shielding. For example, the screen shown in Fig. 9 lists common barriers found in a radiation therapy room, such as walls and doors, as well as links to regulations relating to dose limits that apply to the design of barriers. As shown in the upper left hand portion of the screen shown in Fig. 9, regulations promulgated by Taiwan can be linked to the barrier design for shielding in the "Linac Shielding - New Construction" process.

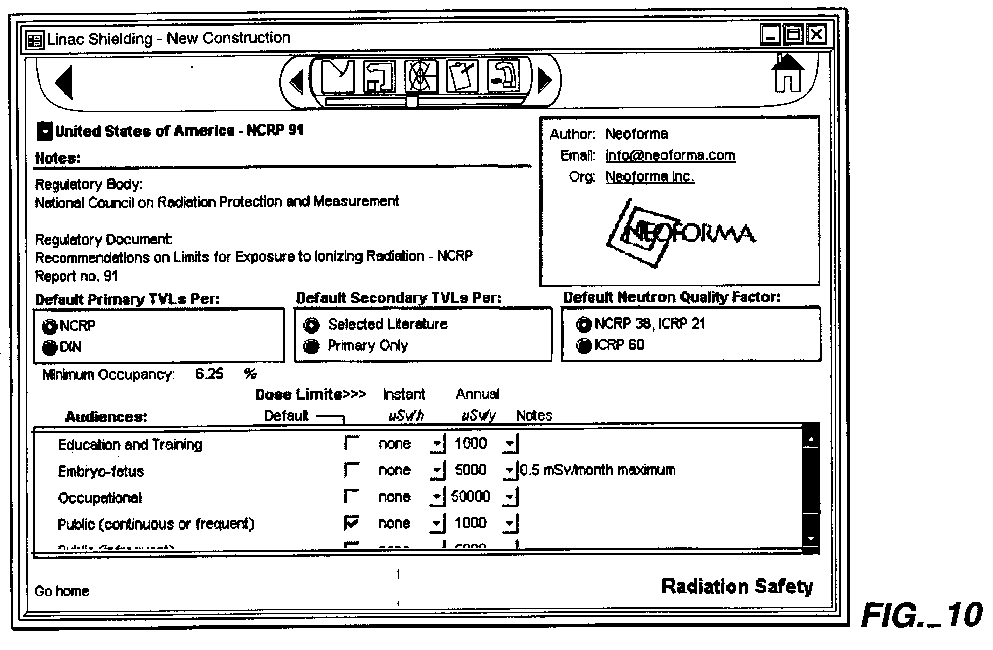

The screen shown in Fig. 9 accessed through the linac shielding process for new construction is linked to regulatory information contained in the library information stored in the database. As described above, the particular screen shown in Fig. 9 is linked to regulations promulgated by Taiwan. This evidences the flexibility of the computer aided planning tool to plan projects, such as radiation therapy rooms, worldwide. The regulations that apply to a specific project being planned by the user can also be selected by the user. The user can compare one project design to another as a function of the applicable regulations in one part of world to another. For example, the applicable regulations can be regulations promulgated by the United States of America, instead of Taiwan, as shown in the radiation safety screen shown in Fig. 10. The screen shown in Fig. 10 displays the regulatory information with respect to radiation safety requirements in the United States contained in the library information stored in the database. The information contained in the library also contains information submitted by the community of entities which is supplied with the computer aided planning tool with respect to previous shielding designs, such as barrier walls, that the user can view for suggestions on how to create a wall for the project being planned.

As in the case of product information stored in the database, library information can also be unmodifiable, display-only information or alternatively can be customizable information which can be imported by the user utilizing a file manager program to be edited for use by the user. In this regard, a new file can be created through a files menu. The creator of the file can then determine whether the file is unmodifiable, display-only information or customizable information. In order to designate the file that is created as unmodifiable, display-only information, the entity that creates the file includes the log-in name and unique password assigned to that entity with the file. For example, the source of the regulatory information displayed in the screen shown in Fig. 10 is identified with the source of that information and is therefore unmodifiable, display-only information. By default, if no such log-in name or password is included, the information is customizable and can be imported by a user and modified for use. If the library information is designated as unmodifiable, display-only information, only the entity that created the file can access that file and update the information in the file. Therefore, the maintenance responsibility for information in the library that is designated unmodifiable, display-only information resides with the entity that created the file.

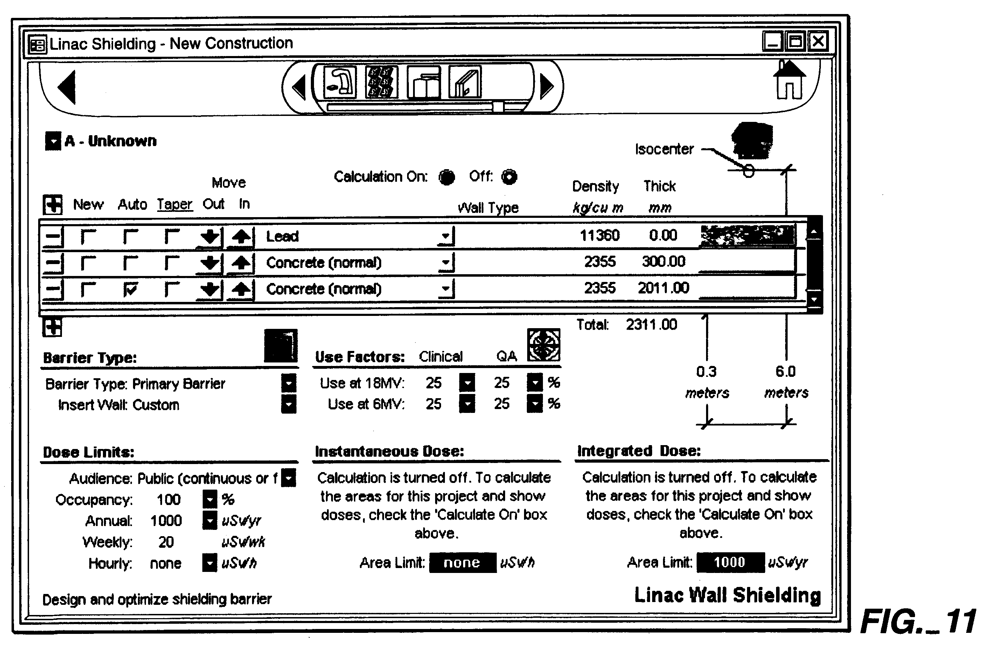

The screen for the specialized shielding tool which comprises the linac shielding process for new construction is shown in Fig. 11. The shielding tool can be utilized by the user to optimize the design of barriers to obtain cost savings through linkage of parameters of various materials that can be utilized for a shielding design project to the shielding tool for calculating material thicknesses for barriers, such as walls. As shown in Fig. 11, the shielding tool has not been enabled by the user to calculate shielding requirements, since the default is the "Calculation Off" button at the top of the table. The screen also illustrates that no specific vendor material has been selected for inclusion in the design for the shielding barrier being designed by the user in connection with the project being planned.

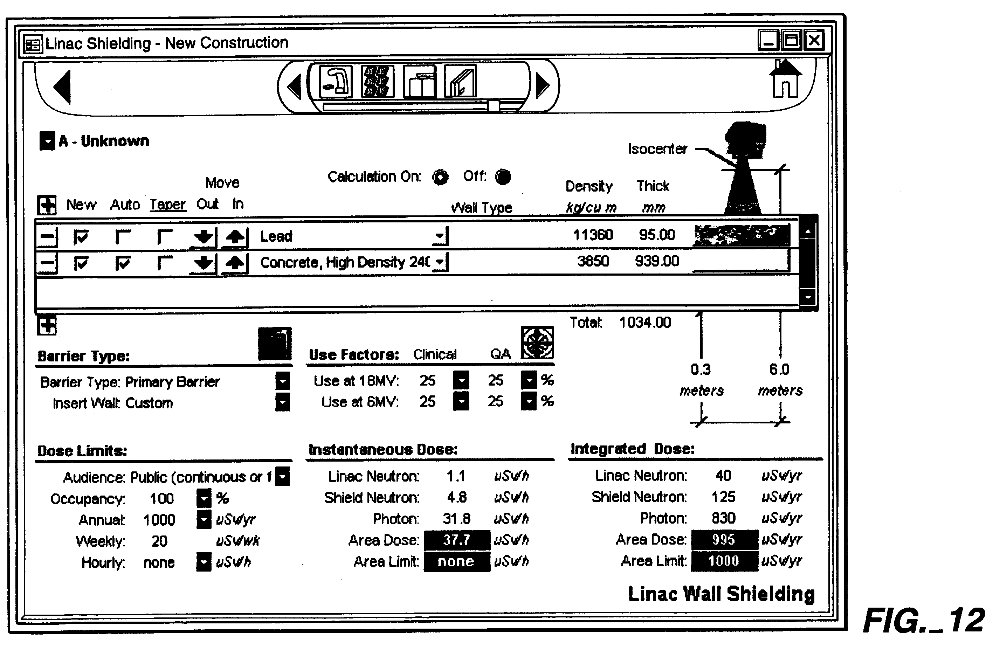

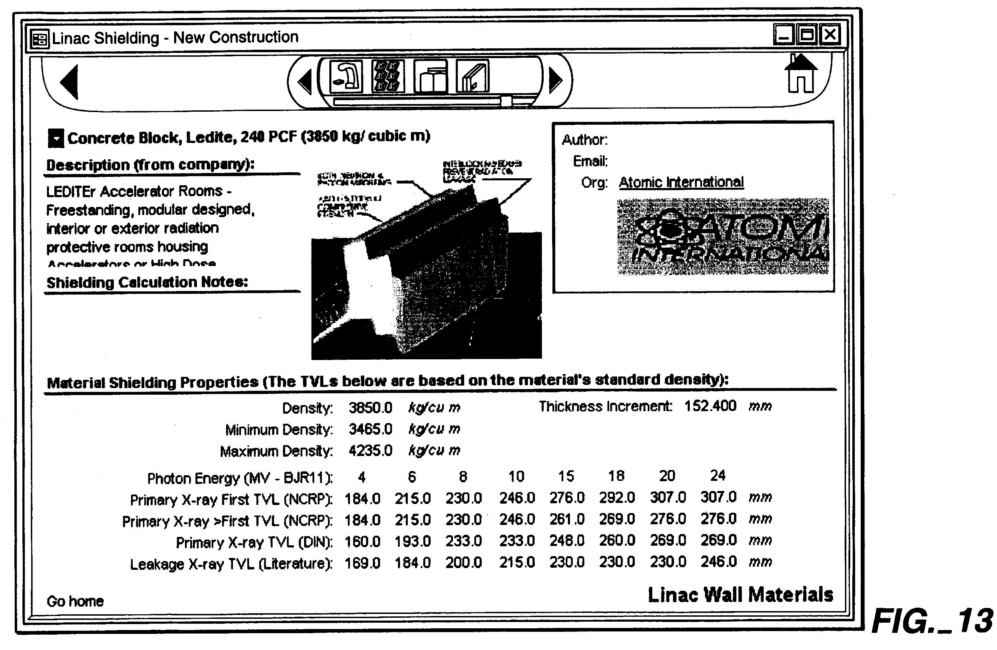

The links to materials from vendors, for example, specific components of material, such as modular walls, or shielding designs utilizing materials provided by various vendors in a design created by the user, are linked to the shielding tool for implementing a project. In this regard, the shielding tool is linked to a gallery of materials information stored in the database and linked to the shielding tool. The materials, such as lead and concrete blocks, can be generic and vendor-specific materials. The materials information includes parameters of various materials, which are used by the shielding tool to calculate required thicknesses of materials utilized in the design of shielding for a radiation therapy room. The screen shown in Fig. 12 indicates selection of a vendor-specific concrete block material by positioning the pointer on the top "Concrete (normal)" line in the table shown in Fig. 11 and scrolling utilizing the up/down arrows to a vendor-specific concrete block material from the product catalog stored in the database and clicking mouse 18 on that material. The selection is linked to the "Linac Wall Materials" gallery in the gallery of materials information. The user can access the vendor-specific information for the wall material by clicking on the selected material in the table shown in Fig. 12, which causes material information to be displayed. The information displayed in response to clicking on the material shown in the table in Fig. 12 is displayed in the screen shown in Fig. 13.

The shielding tool automatically imports the parameters of the material selected by the user for calculating the shielding thickness requirements for the selected materials. The calculations are initiated by the user selecting the "Auto" check box on the left hand side of the table shown in Fig. 12 and also selecting the "Calculation On" button above the center of the table. In the example calculation illustrated by the screen shown in Fig. 12, the thickness of lead is set by the user, and the shielding tool calculates the thickness of the selected concrete block material that is needed to satisfy the given dosage regulations. The shielding tool utilizes conventional shielding computations to determine thicknesses for materials and calculates thicknesses using the parameters of the selected material, as indicated by the partial product identification and density parameter which also appear in the screen shown in Fig. 13.

The user can also access specific product information that is used in radiation therapy rooms. The information accessible to the user includes information from the materials gallery. For example, the screen shown in Fig. 13 is linked to the shielding tool shown in Figs. 11 and 12. If the user had simply browsed the materials gallery for a material for designing a barrier wall and selected the vendor-specific wall material displayed in the screen shown in Fig. 13, the user can import the material parameters contained in the file for the material through the file manager by invoking "Insert Wall" which appears at the left central portion of the screen shown in Fig. 12 and thus select the vendor-specific wall material for calculating the thickness of that material for the shielding project being planned.

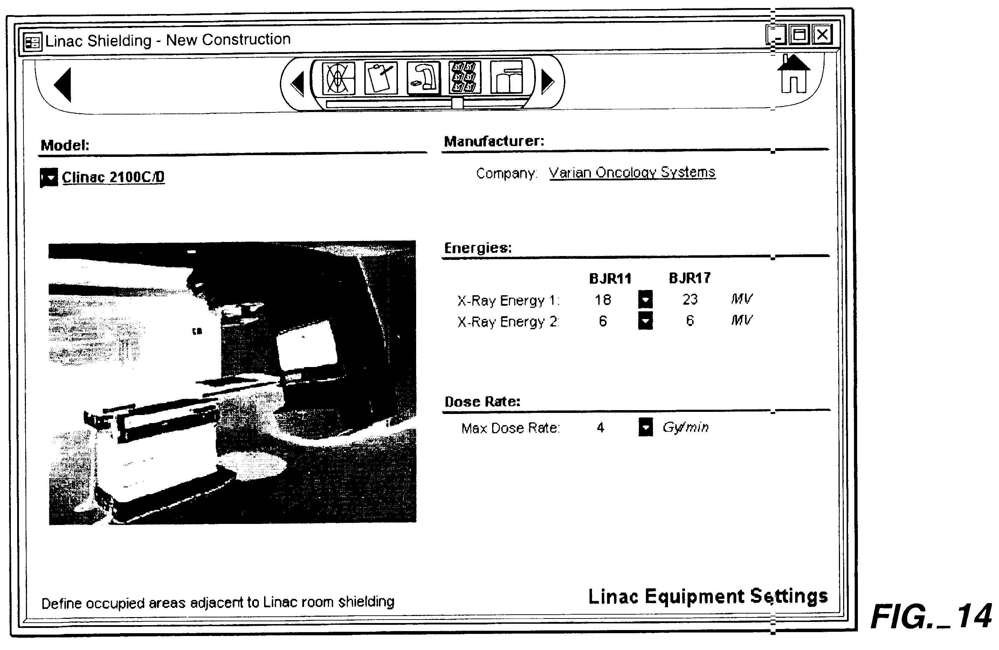

Also, as indicated above, the product gallery for radiation therapy rooms is accessible to the user through the linac shielding process for new construction. For example, vendor-specific equipment from the product gallery can be accessed through the "Linac Shielding - New Construction" process, as shown in Fig. 14. The screen shown in Fig. 14 displays product information with respect to vendor-specific equipment utilized in a radiation therapy room at a healthcare facility. Consequently, there is also a link to the company information gallery, as well, through the linac shielding process for new construction.

In summary, the linac shielding process for new construction enables the user to plan a design based on community provided information, regulations, generic and vendor-specific materials that can be utilized, and vendor-specific products. Then, the shielding tool calculates material thicknesses for barriers when "Auto" and "Calculation On" which appear in the screen shown in Fig. 12 are selected by the user using the parameters of the materials selected by the user. The user can then access the company information gallery for more information if the shielding design for the project being planned is satisfactory.

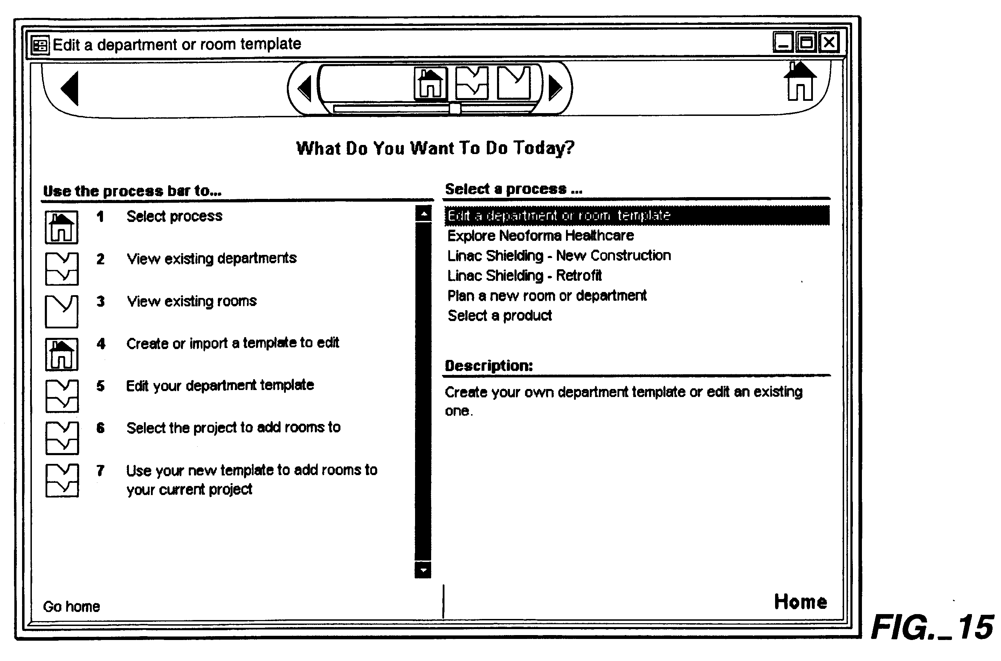

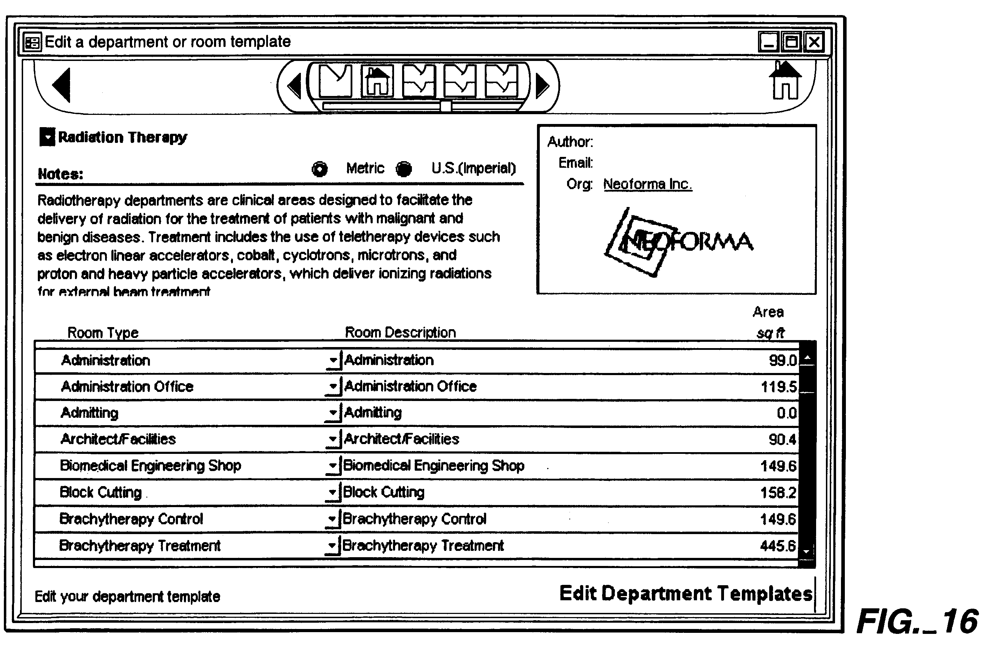

Another process selectable from the process screen shown in Fig. 2 is "Edit a department or room template." The user first positions the pointer on "Edit a department or room template" to highlight that process, as shown in Fig. 15 and then clicks mouse 18 to select that process. Selection of the department or room template editing process causes the computer aided planning tool to access the screens linked to department templates. For example, the department template screens include templates for different departments, such as different templates for a radiation therapy department at a healthcare facility. A screen which provides one exemplary department template for a radiation therapy department is shown in Fig. 16. Since this screen identifies the source of the displayed information in the upper right portion of the screen, the department template shown in Fig. 16 comprises unmodifiable, display-only information. In contrast, any department template which is modifiable, such as a department template in a file created by the user or customizable because the source of the information is not identified, can be imported by the user and modified to design a department relating to the project.

As shown in Fig. 16, the screen lists various rooms included in the radiation therapy department included in the particular department template that appears in the screen. The user can position the pointer on an individual room identified in the list of rooms and click mouse 18 to access the screen that corresponds to the selected room. Therefore, the user can navigate among rooms of the department shown in the department level screen shown in Fig. 16.

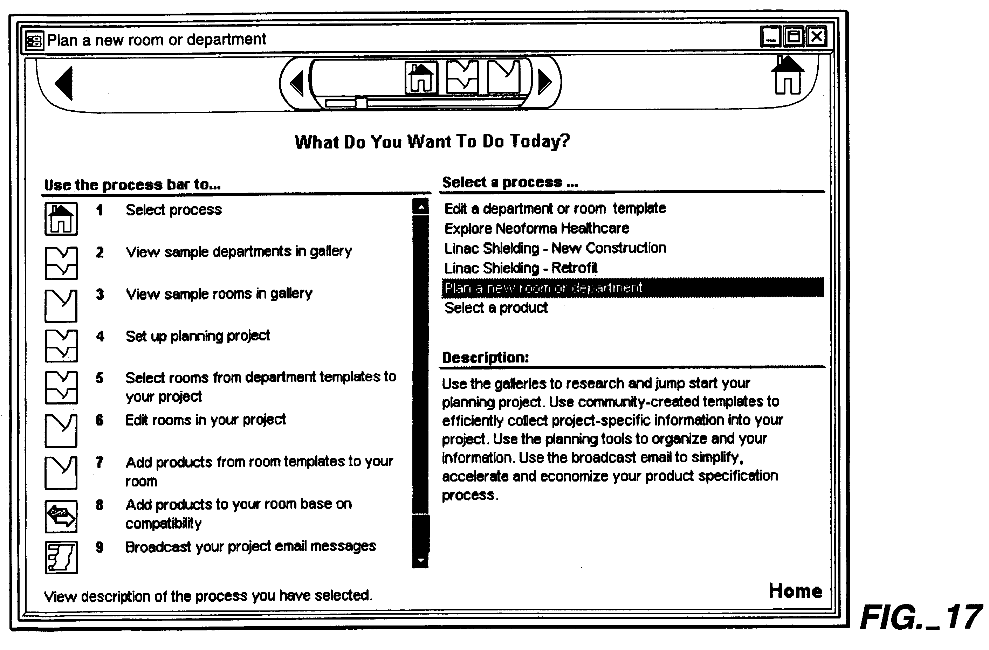

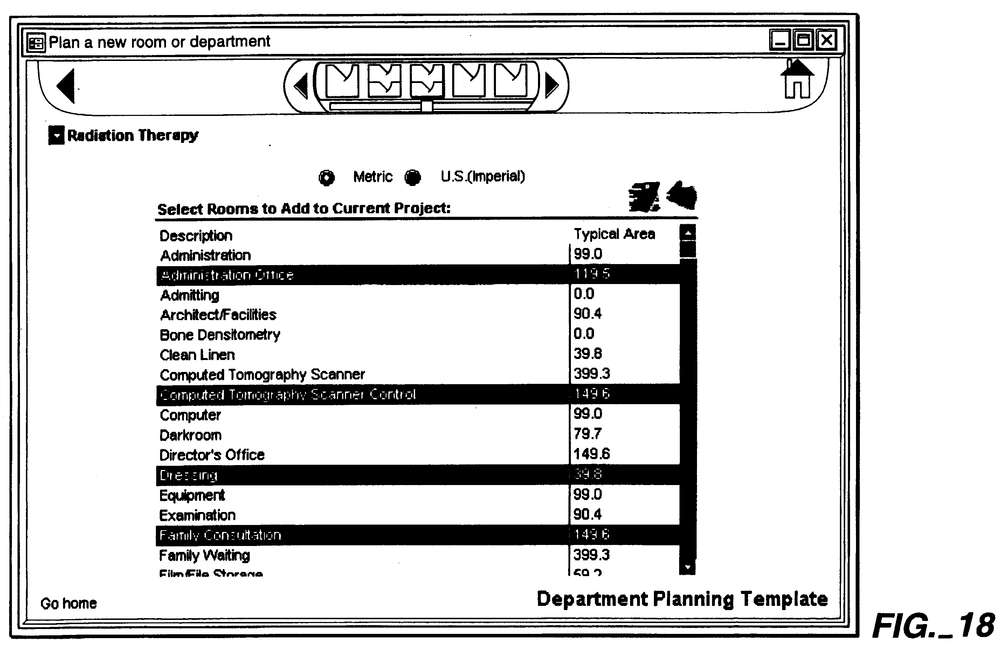

Finally, another process selectable from the process screen shown in Fig. 2 is "Plan a new room or department." The user first positions the pointer on "Plan a new room or department" to highlight that process, as shown in Fig. 17, and clicks mouse 18 to select that process. Selection of the new room or department planning process causes the computer aided planning tool to access the department planning template screens, such as the department planning template screen for a radiation therapy department shown in Fig. 18. The templates enable the user to view the designs and implementations of similar projects and learn from the prior experience of others who have planned those projects. These templates enable the user to design a department based on gleaning an understanding of information displayed in screens which consist of unmodifiable, display-only information indicated when the particular template is identified with the source that submitted the template or by selecting a screen that displays customizable information and importing that template so that the design embodied in the department template can be edited as needed to create a design for the department being planned. Therefore, the user can create a design or import a template if not designated unmodifiable, display-only information.

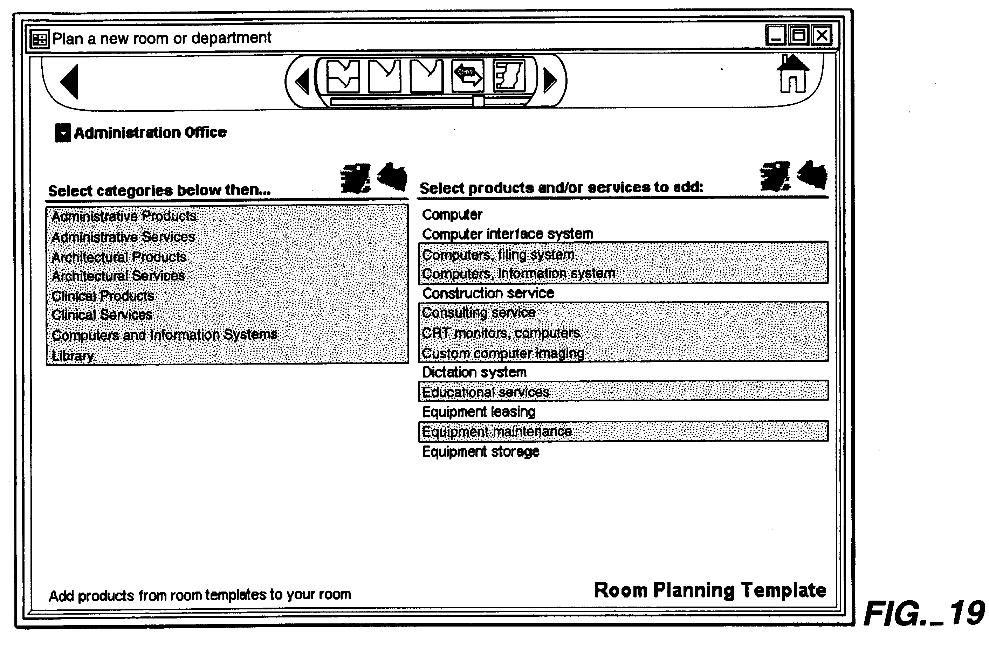

The rooms which comprise the department, such as the radiation therapy department profiled in the screen shown in Fig. 18, are linked to the department planning template. The rooms templates linked to the department planning template can be selected by the user locating the pointer to one or more rooms listed in the department planning template and clicking mouse 18 on the individual rooms. One of the room planning templates accessible upon selection of the "Administration Office" from the department planning template shown in Fig. 18 is illustrated by the room planning template for the "Administration Office" shown in Fig. 19.

The department and room planning templates which are accessed by the "Plan a new room or department process" can be created by any entity which is supplied with the computer aided planning tool. The entity can create a file that becomes a department and/or room template and designate those/that template unmodifiable, display-only information by including the log-in name and unique password of that entity or customizable information by not including the entity log-in name and unique password. If the source of the template is identified, the responsibility for maintaining the template resides with the identified source, which is the only entity that has access to the information through log-in name and unique password to update or otherwise modify the information. For example, the department planning and room planning templates shown in Figs. 18 and 19 are customizable department and room information which can be imported by the user and edited to create a design for a project being planned by the user. Templates can be individually or collectively incorporated into the project being planned by the user.

As illustrated by the screen shown in Fig. 19, the room planning template can be further linked to product information in the products gallery. The user can access the products gallery to complete the process of planning a project by performing the task of implementing the components of the project, such as selecting the equipment, furniture, and accessories, such as interior decorating appointments, based on positioning the pointer on the products listed in the room planning template listed in the screen shown in Fig. 19 and double clicking on the products.

If department planning and/or room planning templates are unmodifiable, display-only information identified with the entity which is the source of that information or vendor-specific products are linked to the products listed in the room planning templates for implementing components of the room, a link to the company information gallery exists. Therefore, the user can access information for contacting the identified entity or vendor, for example, the web and e-mail addresses, the telephone and facsimile transmission numbers, and street addresses, as well as the company profile, of the identified entity or vendor.

The user can use an accessed web site address of a vendor, for example, to contact that vendor. The computer aided planning tool enables the user to connect to the web site of a vendor by positioning the pointer on the name or logo of the vendor in the screen which profiles that company in the company information gallery. For example, the vendor identified in the screen shown in Fig. 5 can be accessed through any product screen or unmodifiable, display-only information sourced by that vendor, and the user can position the pointer on the company name or logo and connect to the home page at the web site of that particular company by clicking mouse 18 from that screen. On the other hand, if the user positions the pointer on the company name or logo in a screen in the products gallery which includes a specific product reference, for example, on the name of the company identified in Fig. 13, and clicks mouse 18, the user is connected to the relevant page at the vendor web site that contains information pertinent to the specific product. Therefore, the applicable web site page is directly accessible from the screen in the products gallery relating to that product, which obviates the need for the user to browse the web site of the vendor for specific product information.

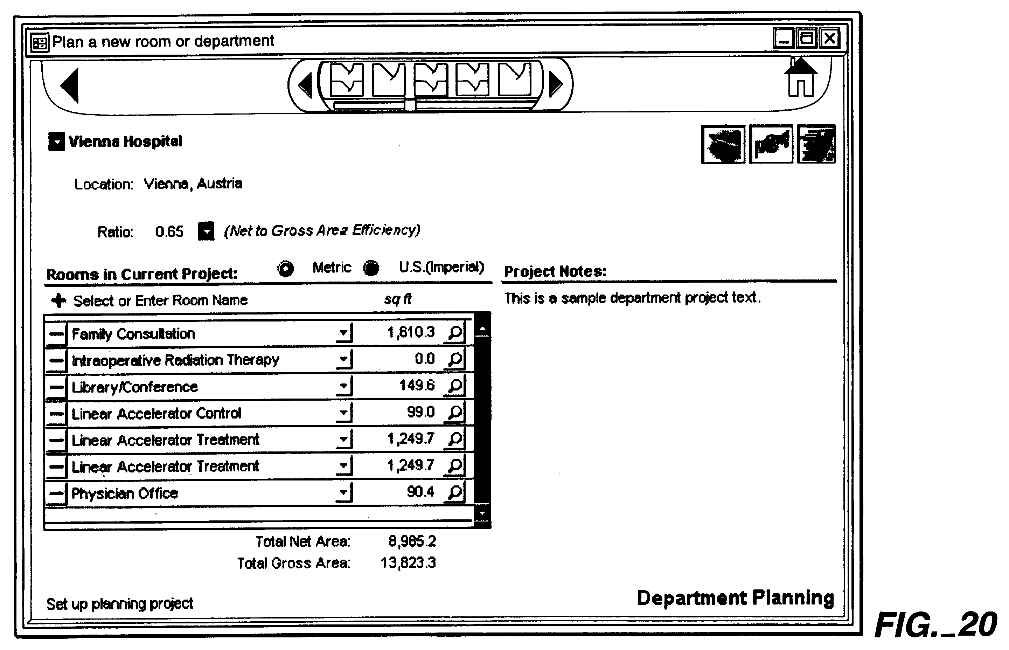

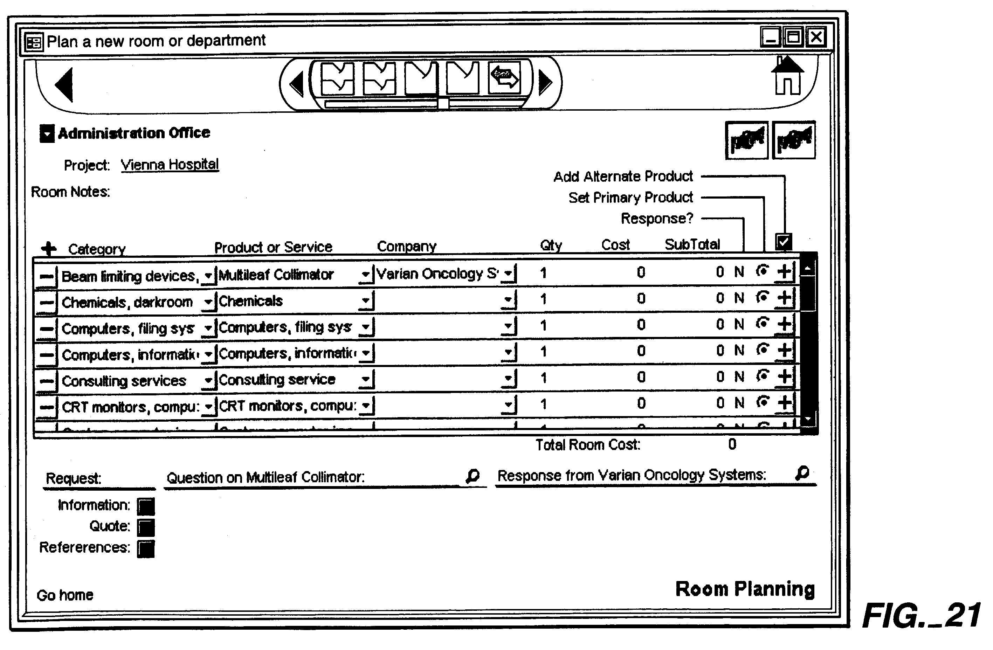

Once the user has planned the design for a project, including a department and room design, the user can utilize the computer aided planning tool to perform the task of actually planning the implementation of the various components of the project being planned, for example, the selection of products for implementation of the components incorporated into the design for the project. For example, the user can select a customizable template for a department for a healthcare facility and select that template as the department planning template for the project being planned, as illustrated in the screen shown in Fig. 20. The user can then access the room planning template linked to that department planning template, as shown in Fig. 21. The user can then select products to implement the components of the room. In this regard, the user can browse the products gallery, and browsed product information can be actively added to the project being planned, as indicated by the selection of a vendor-specific product in the first line of the table which appears in the screen shown in Fig. 21. In order to complete the task of implementing the components of a project being planned, as well as determine the cost of the project, the user may need additional information from various vendors of products. This task can be facilitated by two-way connectivity to the various vendors by user broadcasted e-mail.

After the user has completed the task of assembling a table of vendor-specific products for implementing the components of a project being planned, the user decides what, if any, additional product information is needed. The user then generates pre-formatted e-mail messages, for example, "I am [the user profiled under the user options]. I am requesting [check box(es)] about the [product from the products listed in the table shown in Fig. 21]." The check boxes appear in the lower left hand corner of the screen shown in Fig. 21. These check boxes include "Information," "Quote," and "References." The user can also elect to add specific comments or requests which are appended to the pre-formatted e-mail message, for example, "Please quote in Yen." The additional information sought by the user positioning the pointer to one or more check boxes and clicking mouse 18 is then assembled into a pre-formatted e-mail message to the vendor of each product which appears in the table in the screen shown in Fig. 21.

The table which appears in the screen shown in Fig. 21 is linked to the company information gallery. Therefore, the e-mail addresses of the vendors which have e-mail addresses are accessed and assembled into the respective pre-formatted e-mail messages. If the vendor does not have an e-mail address, the request is e-mailed to the supplier of the computer aided planning tool, which in turn generates a facsimile transmission incorporating the request to the vendor.

All of the e-mail requests that are to be broadcast are routed to an e-mail queue, which is accessible from the project being planned and mailed as part of the process. The e-mail requests are sent through a standard e-mail connection over the Internet.

Each pre-formatted e-mail message also contains "This is from [a user]. Please reply by filling in between the brackets with the requested information." The vendor then replies by entering the requested information between the brackets and responding to the user by way of an e-mail reply over the Internet.

When e-mail is checked by the user, the user identifies pertinent e-mail which is generically titled "Response to Healthcare Inquiry," and the user saves this e-mail to the e-mail queue. Every time that the computer aided planning tool is opened, the e-mail queue is checked. Replies from vendors that have been transferred to the e-mail queue are parsed, and the additional information that was requested by the user is converted to vendor responses. The information is also entered into the line of the table which appears in the screen shown in Fig. 21 for the particular product to which the additional information relates. As shown in the screen which appears in Fig. 21, an indication is displayed whether or not the vendor has responded. Therefore, status reports can be generated by the user. The information listed in the table which appears in the screen shown in Fig. 21 is also preferable directly linked to a spreadsheet application program for calculating the cost of the project being planned. Once the table which appears in the screen shown in Fig. 21 is complete, an equipment list can be generated for implementing the components of the project being planned. In another embodiment, compatibility templates can be utilized to determine which products are compatible with other specific products based on the information linked to the table which appears in the screen shown in Fig. 21.

The computer aided planning tool in accordance with the invention provides a platform having a process-based structure unlike known CAD productivity tools or the Radiotherapy Department Toolkit. The process-based structure comprises various planning templates linked to information stored in a relational database related to the task performed utilizing that particular template. The computer aided planning tool enables users to navigate smoothly back and forth from information available in various information galleries to process tools utilized to design the components of the project. The database comprises a product catalog backbone and a library of additional information for targeted access. Unlike known productivity tools, the information is unmodifiable or customizable by designation of the entity which submits that information. For example, product vendors can designate their information unmodifiable and distribute their own files of information to users directly. Database information can be supplemented by enabling users to connect to web sites over the Internet, and unlike the known prior art, a particular page at a web site may be accessed based on information selected during utilization of a particular planning template, rather than requiring users to browse the web site for the relevant page. Finally, automated two-way e-mail over the Internet is provided to facilitate the acquisition of supplemental information which is then accessible by users and can be automatically imported for use in the planning templates, including use in applications programs, such as spreadsheets for calculating costs for the project.

It will be understood and appreciated that the embodiments of the present invention described above are susceptible to various modifications, changes, and adaptations. For example, the computer aided planning tool in accordance with the invention can also be provided for planning projects in the hospitality (e.g., hotel, restaurant, entertainment), education, retail, and service industry (hair salons, dentists, etc.). All is intended to be comprehended within the meaning and range of equivalents of the appended claims.

## Claims

1. A computer-implemented tool for planning a project comprising:
means for providing at least one planning process tool for planning a given type of project comprising a plurality of planning templates, each planning template for planning a component of the given type of project;
means connected to the means for providing the planning process tool for providing a database of stored information related to the given type of project;
means connected to the means for providing the planning process tool for displaying the planning templates for enabling selection of a planning template;
means for selecting the planning template;
means responsive to selection of the planning template for displaying at least one planning task for implementing the component of the given type of project;
means for selecting the planning task;
means connected to the database for enabling access to at least a portion of the stored information in the database based on the selected planning task, whereby the planning template is linked to information stored in the database that is related to planning the component of the given type of project;
means connected to the planning template for selecting access to information stored in the database for implementing the component: and
means responsive to information accessed from the database for displaying the accessed information.

2. A computer-implemented planning tool comprising:
means incorporated into a computer and executed by the computer to provide a knowledge-based tool for performing at least one planning process for planning a given type of project, the tool comprising at least one planning template for planning a component of the given type of project;
means connected to the computer for providing a database of stored information related to the given type of project, the database comprising a library of published information, the published information comprising unmodifiable, display-only information and customizable information, the unmodifiable, display-only information being associated with an identifiable source of the published information and the customizable information being associated with an anonymous information source;
means connected to the computer for displaying the planning template for enabling selection of the planning template;
means for selecting the planning template;
means responsive to selection of the planning template for displaying at least one planning task for implementing the component of the given type of project;
means connected to the database for enabling access to the library in the database based on the selected planning task, whereby the planning template is linked to the library stored in the database related to planning the component of the given type of project;
means connected to the planning template for selecting access to the library stored in the database for providing information from the library stored in the database relating to the component; and
means responsive to information from the library accessed from the database for displaying the accessed information.

3. A computer-implemented planning tool comprising:
means incorporated into a computer and executed by the computer to provide a knowledge-based tool for performing at least one planning process for planning a given type of project, the tool comprising at least one planning template for planning a component of the given type of project;
means connected to the means for providing the planning process tool for providing a database of stored information related to the given type of project;
means connected to the computer for displaying the planning template for enabling selection of the planning template;
means for selecting the planning template;
means responsive to selection of the planning template for displaying at least one planning task for implementing the component of the given type of project;
means for selecting the planning task;
means connected to the database for enabling access to at least a portion of the stored information in the database based on the selected planning task, whereby the planning template is linked to information stored in the database that is related to planning the component of the given type of project;
means connected to the planning template for selecting access to information stored in the database for implementing the component; and
means responsive to information accessed from the database for displaying the accessed information.

4. A computer-implement tool comprising:
means incorporated into a computer and executed by the computer to provide a knowledge-based tool for a selection process for a given type of project for selecting a component of the given type of project;
means connected to the means for providing the process tool for providing a database of stored information related to the given type of project;
means responsive to selection of the process for displaying at least one task for implementing the component of the given type of project;
means for selecting the task;
means connected to the database for enabling access to at least a portion of the stored information in the database based on the selected task, whereby the process is linked to information stored in the database that is related to the component of the given type of project;
means responsive to information accessed from the database for displaying the accessed information;
means external to the process tool and database, the external means comprising means for maintaining the information stored in the database for implementing the component;
an Internet connection between the process tool and the external means;
means connected to the process tool for sending a request for component implementing information to a multiple page web site of the external means over the Internet; and
means connected to the external means and responsive to the request for accessing a particular page of pertinent information relating to the component implementing information and communicating the pertinent information on the particular page of the web site to the process tool over the Internet.

5. A computer-implemented planning tool comprising:
means incorporated into a computer and executed by the computer to provide a knowledge-based tool for performing at least one planning process for planning a given type of project, the tool comprising at least one planning template for planning a component of the given type of project;
means connected to the means for providing the planning process tool for providing a database of stored information related to the given type of project;
means connected to the computer for displaying the planning template for enabling selection of the planning template;
means for selecting the planning template;
means responsive to selection of the planning template for displaying at least one planning task for implementing the component of the given type of project;
means for selecting the planning task;
means connected to the database for enabling access to at least a portion of the stored information in the database based on the selected planning task, whereby the planning template is linked to information stored in the database that is related to planning the component of the given type of project;
means connected to the planning template for selecting access to information stored in the database for implementing the component;
means responsive to information accessed from the database for displaying the accessed information;
means external to the planning process tool and database, the external means comprising means for maintaining the information stored in the database for implementing the component;
an Internet connection between the planning process tool and the external means;
means connected to the planning process tool for sending a request for component implementing information to a web site of the external means over the Internet; and
means connected to the external means and responsive to the request for accessing a particular page of pertinent information relating to the component implementing information and communicating the pertinent information on the particular page of the web site to the process tool over the Internet.

6. A computer-implemented tool for planning a project comprising:
means for providing at least one planning process tool for planning a given type of project comprising at least one planning template for planning a component of the given type of project;
means connected to the means for providing the planning process tool for providing a database of stored information related to the given type of project;
means connected to the means for providing the planning process tool for displaying the planning template for enabling selection of the planning template;
means for selecting the planning template;
means responsive to selection of the planning template for displaying at least one planning task for implementing the component of the given type of project;
means for selecting the planning task;
means connected to the database for enabling access to at least a portion of the stored information in the database based on the selected planning task, whereby the planning template is linked to information stored in the database that is related to planning the component of the given type of project;
means connected to the planning template for selecting access to information stored in the database for implementing the component;
means responsive to information accessed from the database for displaying the accessed information and enabling selection of at least one query regarding the displayed accessed information;
means for selecting the query;
means responsive to selecting the query for formatting a request based on the selected query;
means responsive to the request for communicating the request to means external to the planning process tool and database, the external means comprising means responsive to the request for processing the communicated request comprising at least additional information representative of a response to the query and means for communicating the response to the request to the planning process tool; and
means responsive to the response to the communicated request for displaying the additional information related to implementation of the component.

7. A computer-implemented planning tool as defined in one of the claims 1 to 6 wherein the database comprises product information, whereby the database comprises a product catalog.

8. A computer-implemented planning tool as defined in one of the claims 1 to 7 wherein the given type of project comprises a facility comprising rooms and the planning template comprises means for configuring at least one room design.

9. A computer-implemented planning tool as defined in claim 8 wherein the database comprises product information, whereby the database comprises a product catalog, and wherein the component comprises an item selected from among the group of items consisting of equipment, furniture, and accessories.

10. A computer-implemented planning tool as defined in claim 9 wherein the facility is a healthcare facility and wherein the equipment comprises medical equipment.

11. A computer-implemented planning tool as defined in one of the claims 1 to 10 wherein the database comprises a library of published information, the published information comprising unmodifiable, display-only information and customizable information, the unmodifiable, display-only information being associated with an identifiable source of the published information and the customizable information being associated with an anonymous information source and wherein the means connected to the database for enabling access to at least a portion of the stored information in the database based on the selected planning task enables access to the library in the database based on the selected planning task, whereby the planning template is linked to the library stored in the database related to planning the component of the given type of project, and further comprising:
means connected to the planning template for selecting access to the library stored in the database for providing information from the library stored in the database relating to the component; and
means responsive to information from the library accessed from the database for displaying the accessed information.

12. A computer-implemented planning tool as defined in claim 11, further comprising means connected to the means responsive to information from the library accessed from the database for displaying the accessed information for importing only customizable information from the accessed library information for editing and saving in an edited file.

13. A computer-implemented planning tool as defined in claim 11 wherein the unmodifiable, display-only information corresponds to library information submitted by the identifiable source together with a password assigned to the identifiable source and the unmodifiable, display-only information is maintained by the identifiable source.

14. A computer-implemented planning tool as defined in claim 13, further comprising an Internet connection between the planning process tool and the identifiable and anonymous sources, and wherein library information is accessible from the identifiable and anonymous sources by the planning process tool over the Internet.

15. A computer-implemented planning tool as defined in one of the claims 1 to 14, further comprising means for calculating a quantity of the implementing component.

16. A computer-implemented planning tool as defined in one of the claims 1 to 15, further comprising means for calculating a cost for the quantity of the implementing component.

17. A computer-implemented planning tool as defined in one of the claims 1 to 11, further comprising means for calculating a quantity of the implementing component.

18. A computer-implemented planning tool as defined in claim 3, further comprising means external to the planning process tool and database and an Internet connection between the planning process tool and the external means, the external means comprising means for maintaining the information stored in the database for implementing the component and submitting the maintenance information over the Internet together with a password assigned to the external means.

19. A computer-implemented tool as defined in claim 4 or 5, further comprising means connected to the external means for maintaining the pertinent information relating to the component implementing information.

20. A computer-implemented planning tool as defined in claim 6 wherein the means responsive to information accessed from the database for displaying the accessed information and enabling selection of at least one query regarding the displayed accessed information comprises means for enabling selection of a query selected from among the group of queries consisting of information and quotation and the means responsive to selecting the query for formatting a request based on the selected query comprises means for assembling an e-mail message comprising the selected query and header data containing one of the e-mail address corresponding to the external means and a supplier of the planning process tool and a return e-mail address corresponding to the address of the planning process tool and the means responsive to the request for communicating the request to means external to the planning process tool and database comprises means connectable to the Internet for transmitting the e-mail message to one of the external means and the supplier of the planning process tool.

21. A computer-implemented planning tool as defined in claim 20 wherein the means responsive to information accessed from the database for displaying the accessed information and enabling selection of at least one query regarding the displayed accessed information comprises displaying a respective check box for enabling selection of a query selected from among the group of queries consisting of information and quotation and wherein information is requested as a default for failure of selection of a check box.

22. A computer-implemented planning tool as defined in claim 20 wherein the e-mail address of the request corresponds to the external means and the request is transmitted to the external means and wherein the means responsive to the request for processing the communicated request comprising at least additional information representative of a response to the query comprises means for assembling an e-mail message comprising the additional information and the return e-mail address corresponding to the address of the planning process tool and the means for communicating the response to the request to the planning process tool comprises means connectable to the Internet for transmitting the e-mail message response to the planning process tool.

23. A computer-implemented planning tool as defined in claim 22, further comprising:
means connected to the planning process tool responsive to the additional information for storing the additional information in an e-mail queue and wherein the means connected to the planning template for selecting access to information stored in the database for implementing the component also enables access to the additional information stored in the e-mail queue for implementing the component and the means responsive to information accessed from the database for displaying the accessed information also is responsive to the additional information accessed from the e-mail queue for displaying the accessed additional information.

24. A computer-implemented planning tool as defined in claim 20 wherein the e-mail address of the request corresponds to the supplier of the planning process tool and the request is transmitted to the supplier, and further comprising means at the address of the supplier for responding to the request by converting the message to a facsimile transmission and sending the facsimile transmission to means for receiving a facsimile transmission at a telephone number corresponding to the external means.

25. A computer-implemented planning tool as defined in claim 6, further comprising means connected to the planning process tool for enabling incorporation of additional customizable information into the query for communication to the external means.
